(19) **Europäisches Patentamt / European Patent Office / Office européen des brevets**

(11) **EP 3 658 852 B1**

(12) **FASCICULE DE BREVET EUROPEEN**

(45) Date de publication et mention de la délivrance du brevet:
**13.08.2025 Bulletin 2025/33**

(21) Numéro de dépôt: **18765692.1**

(22) Date de dépôt: **27.07.2018**

(51) Classification Internationale des Brevets (IPC):
**G01C 17/28** *(2006.01)*  **G01C 21/20** *(2006.01)*
**G01C 17/38** *(2006.01)*  **G01C 21/16** *(2006.01)*

(52) Classification Coopérative des Brevets (CPC):
**G01C 17/28; G01C 17/38; G01C 21/1654; G01C 21/206**

(86) Numéro de dépôt international:
**PCT/FR2018/051941**

(87) Numéro de publication internationale:
**WO 2019/020962 (31.01.2019 Gazette 2019/05)**

(54) **DETERMINATION DE CAP A PARTIR DU CHAMP MESURE PAR DES CAPTEURS MAGNETIQUES**

BESTIMMUNG EINES STEUERKURSES UNTER VERWENDUNG EINES DURCH MAGNETISCHE SENSOREN GEMESSENEN FELDES

DETERMINATION OF A HEADING USING A FIELD MEASURED BY MAGNETIC SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2017 FR 1757223**

(43) Date de publication de la demande:
**03.06.2020 Bulletin 2020/23**

(73) Titulaire: **SYSNAV**
**27200 Vernon (FR)**

(72) Inventeurs:
• **VISSIERE, David**
  **75009 Paris (FR)**
• **CHESNEAU, Charles-Ivan**
  **75008 Paris (FR)**
• **HILLION, Mathieu**
  **27200 Vernon (FR)**
• **PRIEUR, Christophe**
  **38320 Eybens (FR)**

(74) Mandataire: **Regimbeau**
  **20, rue de Chazelles**
  **75847 Paris Cedex 17 (FR)**

(56) Documents cités:
EP-A1- 2 264 485    FR-A1- 2 999 703
US-A1- 2010 114 517    US-A1- 2014 122 015

• JOHN L CRASSIDIS ET AL: "Unscented Filtering for Spacecraft Attitude Estimation", JOURNAL OF GUIDANCE, CONTROL, AND DYNAMICS, 31 July 2003 (2003-07-31), pages 536 - 542, XP055464572, Retrieved from the Internet <URL:https://www.researchgate.net/profile/John_Crassidis/publication/268554228_Unscented_Filtering_for_Spacecraft_Attitude_Estimation/links/5665bef308ae418a786f24a9.pdf> [retrieved on 20180404], DOI: 10.2514/2.5102

**Description**

## DOMAINE TECHNIQUE GÉNÉRAL ET ART ANTÉRIEUR

La présente invention concerne de façon générale les techniques magnéto-inertielles.

Plus précisément, elle concerne la détermination de cap par des magnétomètres.

Elle trouve en particulier avantageusement application dans le cas de mesures en milieu urbain ou « indoor », c'est-à-dire à l'intérieur de bâtiments.

On utilise classiquement les magnétomètres pour le calcul du cap dans des systèmes embarqués.

Dans ce cas, on fait l'hypothèse que le champ magnétique mesuré par le capteur est le champ magnétique terrestre qui pointe, pour sa composante horizontale, vers le nord magnétique. La différence entre la direction du nord magnétique et du nord géographique (appelée déclinaison magnétique) est connue et tabulée. Sans perte de généralités, on considèrera donc dans la suite que le nord magnétique et le nord géographique sont confondus, et que les magnétomètres indiquent donc ce qu'on appellera le nord.

Typiquement, les méthodes de détermination utilisées pour le calcul du cap à partir des mesures de magnétomètres s'appuient sur :

- une modélisation qui relie la mesure fournie par le magnétomètre et une information relative au cap du système,
- une caractérisation de la pertinence de cette relation pour les mesures réalisées.

Dans une approche classique, le calcul mis en oeuvre peut être un filtrage de type Kalman avec le champ magnétique comme mesure, permettant de recaler le cap qui est contenu dans l'état, avec un bruit de mesure fonction de la caractérisation de la pertinence.

La modélisation consiste à écrire que le champ magnétique mesuré M contient une information de cap, par exemple par l'équation

$$M = R(\psi, \theta, \varphi)^T M_{TERRE}$$

où R est la matrice de rotation permettant de passer du référentiel de l'objet vers le référentiel inertiel terrestre. $\psi, \theta, \varphi$ les angles d'Euler et $M_{TERRE}$ le champ magnétique terrestre.

La pertinence de cette équation est caractérisée par une variance de mesure, c'est-à-dire que l'on suppose que l'erreur de cette égalité est une variable aléatoire gaussienne d'espérance nulle.

Cette variance sert à calculer automatiquement le gain de Kalman qui pondère le recalage pour tenir compte des différents bruits (bruits dynamiques liés à l'environnement externe et bruits de mesure des magnétomètres).

Dans une autre approche encore, on met en œuvre un calcul par filtrage linéaire utilisant le même type de modélisation et de caractérisation.

Dans cette approche, c'est le réglage relatif de l'amplitude du gain de l'équation qui en caractérise la pertinence. En général, ce gain est réglé à la main. L'homme de l'art saura alors le pondérer en fonction de la pertinence de la modélisation.

Ainsi, dans ces deux approches, les paramètres caractérisant la pertinence du modèle (variance du bruit gaussien dans le cas du filtre de Kalman, gain dans le cas du filtrage linéaire) sont généralement des paramètres constants, indépendants du champ magnétique mesuré.

Il a récemment été proposé, par exemple dans les publications :

- W. T. Faulkner, R. Alwood, W. T. David, and J. Bohlin, "Gps-denied pedestrian tracking in indoor environments using an imu and magnetic compass," in Proceedings of the 2010 International Technical Meeting of The Institute of Navigation, (San Diego, CA), pp. 198 - 204, January 2010,
- M. H. Afzal, V. Renaudin, and G. Lachapelle, "Magnetic field based heading estimation for pedestrian navigation environments," in 2011 International Conference on Indoor Positioning and Indoor Navigation, (Guimaraes, Portugal), Sep. 2011,

des caractérisations de la pertinence de la modélisation prenant en compte le champ magnétique mesuré en le comparant à un modèle géomagnétiques de champ magnétique terrestre.

Les caractérisations ainsi réalisées ne donnent toutefois pas pleinement satisfaction, tout d'abord puisqu'elles reposent sur un modèle a priori du champ magnétique, ce qui nécessite d'avoir un modèle au moins aussi précis que la précision souhaitée et ensuite, car elles ne permettent pas de rejeter toutes les perturbations.

Le document « Unscented Filtering for Spacecraft Attitude Estimation » (J.L. Crassidis et F.Landis Markley) décrit un modèle d'estimation de l'orientation d'un engin. Ce modèle se base sur l'application d'un filtre de Kalman et ne prend en compte aucune corrélation. Cependant ce modèle présente lui aussi des biais qui le rendent peu fiable.

Il est aussi connu du document EP 2 264 485 de proposer un modèle simplifié, dans lequel le champ magnétique estimé est égal à la somme de la valeur du champ magnétique mesuré, plus la valeur de la perturbation magnétique, plus la valeur du bruit de mesure. Cependant ce modèle d'évolution de la perturbation ne tient compte que d'une corrélation temporelle de la perturbation, ce qui le rend peu fiable.

Un autre modèle d'estimation de l'orientation d'un engin est connu du document US 2014/122015.

On connaît par ailleurs du document FR 2 999 703 un procédé de détermination d'un biais d'un magnétomètre, en vue de recalibrer ce magnétomètre et corriger ainsi les mesures de champ magnétique fournies par le magnétomètre.

## PRÉSENTATION GÉNÉRALE DE L'INVENTION

Un but général de l'invention est de proposer une solution permettant une meilleure caractérisation de la pertinence de la modélisation utilisée, notamment dans les environnements fortement perturbés.

Notamment, l'invention propose un procédé de détermination de cap tel que défini dans la revendication 1.

De cette façon, le traitement prend en compte l'évolution de la perturbation de cap magnétique entre deux instants d'échantillonnage et tient compte de l'éventuelle corrélation spatiale de la perturbation due à l'environnement dans le cas d'instants d'échantillonnage successifs.

Le recalage qui en résulte est plus fiable que dans l'art antérieur.

Des caractéristiques préférentielles de ce procédé de détermination de cap sont exposées dans les revendications 2 à 9

L'invention concerne en outre :

- un dispositif détermination de cap tel que défini dans la revendication 10,
- un système de navigation magnéto-inertielles comportant au moins un tel dispositif de mesure de cap,
- un produit programme d'ordinateur tel que défini dans la revendication 12, et
- Un moyen de stockage tel que défini dans la revendication 13.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- la figure 1 est un schéma d'équipements pour la mise en oeuvre du procédé selon l'invention ;
- la figure 2 représente plus en détail un exemple de boitier pour la mise en oeuvre du procédé selon l'invention ;
- la figure 3 illustre les étapes principales d'un procédé conforme à un mode de mise en œuvre de l'invention.

## DESCRIPTION D'UN OU PLUSIEURS MODES DE MISE EN ŒUVRE ET DE RÉALISATION

*Généralités - Dispositif de mesure*

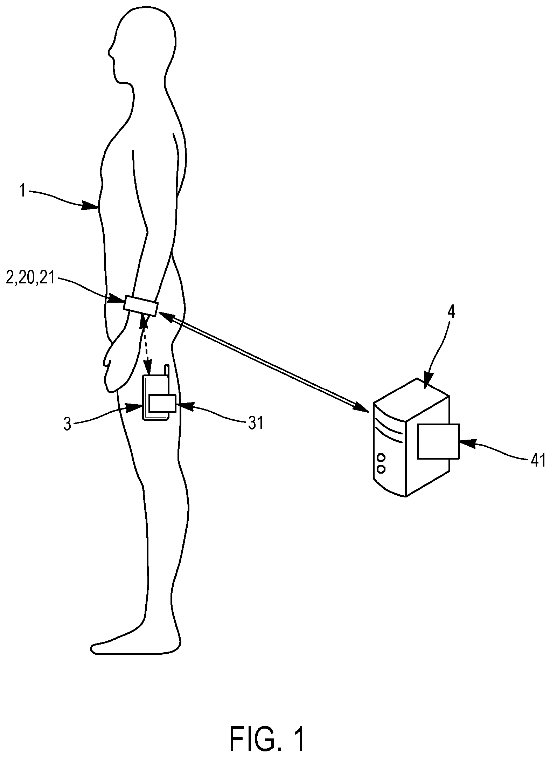

En référence à la figure 1, le dispositif de mesure proposé est par exemple utilisé pour l'estimation du mouvement d'un objet 1 évoluant dans un champ magnétique ambiant (typiquement le champ magnétique terrestre, le cas échéant légèrement altéré par les objets métalliques à proximité), noté $\vec{B}$. Comme on le sait, le champ magnétique est un champ vectoriel tridimensionnel, c'est-à-dire associant un vecteur de dimension trois à chaque point de tridimensionnel dans lequel l'objet est mobile.

Cet objet 1 peut être n'importe quel objet mobile dont la connaissance de la position est souhaitée, par exemple un véhicule à roues, un drone, etc., mais également un piéton.

L'objet 1 comporte dans un boitier 2 (support) une pluralité de capteurs de mesure magnétique 20, i.e. des magnétomètres axiaux 20. Par magnétomètre axial, on entend un élément capable de mesurer une composante dudit champ magnétique, i.e. la projection dudit vecteur champ magnétique $\vec{B}$ au niveau dudit magnétomètre 20 selon son axe.

Plus précisément, les magnétomètres 20 sont solidaires du boitier 2. Ils présentent un mouvement sensiblement identique au boitier 2 et à l'objet 1 dans le référentiel terrestre.

De façon préférée, le référentiel de l'objet 1 est muni d'un repère cartésien orthonormé dans lequel les magnétomètres 20 présentent une position prédéterminée dans ce repère.

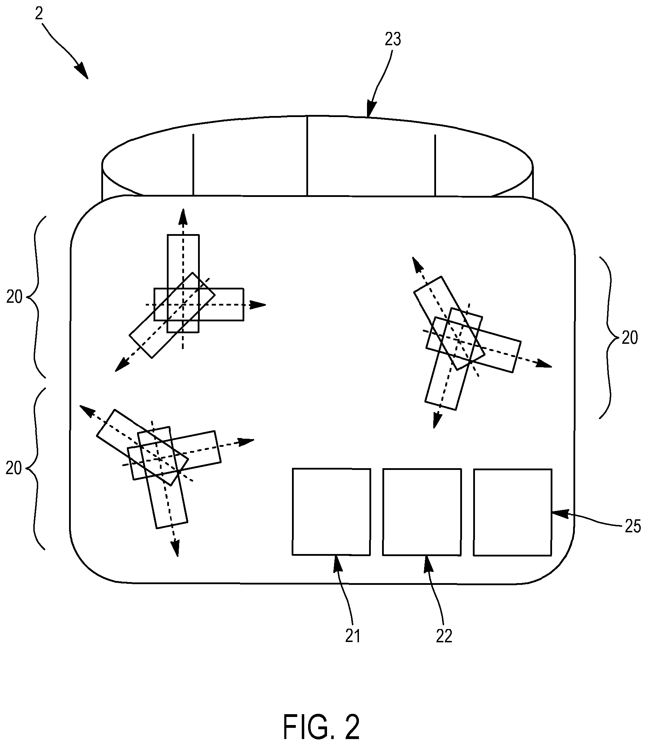

Sur la figure 2, le boitier 2 est fixé sur l'objet 1 (par exemple un membre du piéton) par des moyens d'attache 23. Ces moyens d'attache 23 consistent par exemple en un bracelet par exemple à bande autoagrippante qui enserre le membre et permet la liaison solidaire.

Bien entendu, l'invention n'est pas limitée à l'estimation du mouvement d'un piéton, mais elle est particulièrement avantageuse dans une telle utilisation car elle permet un encombrement très réduit, ce qui est nécessaire pour que le boitier soit portable par un humain de façon ergonomique.

Le boitier 2 peut comprendre des moyens de calcul 21 (typiquement un processeur) pour la mise en œuvre directement en temps réel des traitements du présent procédé, ou bien les mesures peuvent être émises via des moyens de communication 25 vers un dispositif externe tel qu'un terminal mobile (smartphone) 3, voire un serveur distant 4, ou encore les mesures peuvent être enregistrées dans des moyens de stockage de données 22 locaux (une mémoire par exemple de type flash) mémoire locale pour un traitement a posteriori par exemple sur le serveur 4.

Les moyens de communication 25 peuvent mettre en œuvre une communication sans fil à courte portée par exemple Bluetooth ou Wifi (en particulier dans un mode de réalisation avec un terminal mobile 3) voire être des moyens de connexion à un réseau mobile (typiquement UMTS/LTE) pour une communication à longue distance. Il est à noter que les moyens de communication 25 peuvent être par exemple une connectique filaire (typiquement USB) pour transférer les données des moyens de stockage de données 22 locaux à ceux d'un terminal mobile 3 ou d'un serveur 4.

Si c'est un terminal mobile 3 (respectivement un serveur 4) qui héberge « l'intelligence », il comprend des moyens de calcul 31 (respectivement 41) tels qu'un processeur pour la mise en œuvre des traitements du présent procédé qui vont être décrits. Lorsque les moyens de calcul utilisés sont ceux 21 du boitier 2, celui-ci peut encore inclure des moyens de communication 25 pour transmettre la position estimée. Par exemple la position du porteur peut être envoyée au terminal mobile 3 pour afficher la position dans une interface d'un logiciel de navigation.

Les moyens de calcul de données 21, 31, 41 respectivement du boitier 2, d'un smartphone 3 et d'un serveur distant 4 peuvent indifféremment et selon les applications réaliser tout ou partie des étapes du procédé.

Ils comportent à cet effet chacun des moyens de stockage dans lesquels sont mémorisés tout ou partie de séquences d'instructions de code pour l'exécution du procédé.

*Prédiction et recalage*

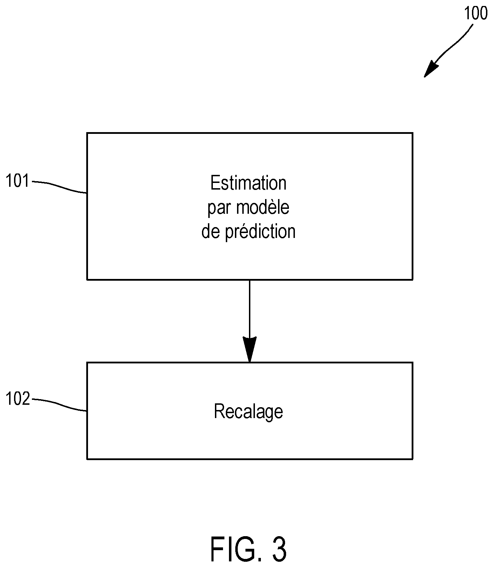

Les moyens de calcul mettent en œuvre (figure 3) un filtrage 100 calculant d'une part une estimation de la valeur de cap par prédiction (étape 101) et d'autre part mettant en œuvre un recalage en fonction d'une estimation d'erreur (étape 102).

Notamment, connaissant la vitesse angulaire $\omega$ donnée par exemple par un gyromètre, l'étape 101 calcule le cap $\psi_{k+1}$ à un instant k+1 comme égal à

$$\psi_{k+1} = \psi_k + \omega.\Delta t$$

où $\psi_k$ est le cap à l'instant k précédent et où $\Delta t$ est la durée séparant ces deux instants d'échantillonnage.

Le recalage 102 prend en compte les mesures réalisées par les magnétomètres 20.

Dans ce qui suit, la mesure du cap magnétique (issue des mesures des magnétomètres) pour un instant k donné est notée $z_\psi[k]$, avec

$$z_\psi[k] = \psi_k$$

Typiquement, le cap magnétique est donné par

$$z_\psi[k] = \operatorname{atan}\left(\frac{My[k]}{Mx[k]}\right)$$

où My et Mx sont deux composantes horizontales du champ magnétique dans un référentiel terrestre, ces deux composantes étant calculées en fonction de l'attitude déterminée pour l'objet 1 par une centrale inertielle de celui-ci.

Les moyens de calcul calculent le cap recalé $\psi_{k+1}^{recale}$ correspondant à l'instant k+1 comme égal à la somme du cap estimé $\psi_{k+1}$ à cet instant et d'un recalage qui est avantageusement fonction

- d'un gain $K_k$ calculé ou ajusté par rapport à l'instant k précédent
- d'une estimation de l'erreur $Err(\psi_{k+1}, z_\psi)$ entre le cap prédit $\psi_{k+1}$ et la mesure $z_\psi$

Ainsi, les moyens de calcul utilisent le cap magnétique issu de la mesure par les magnétomètres pour recaler l'état, et en particulier le cap, en calculant

$$\psi_{k+1}^{recale} = \psi_{k+1} + K_k.Err(\psi_{k+1}, z_\psi)$$

Typiquement, l'erreur *Err*($\psi_{k+1}$, $z_\psi$) peut être une simple différence entre le cap prédit, estimé à l'instant k+ 1 (avant recalage), et le cap magnétique $z_\psi$ issu des mesures des magnétomètres.

D'autres fonctions d'erreurs sont néanmoins possibles, notamment dans le cas d'un filtrage non linéaire.

En particulier, le recalage $K_k$. *Err*($\psi_{k+1}$, $z_\psi$), et plus particulièrement le gain $K_k$, peut avantageusement dépendre du gradient du champ magnétique mesuré par les magnétomètres 20.

De cette façon, la correction de recalage est d'autant plus importante que le champ magnétique varie fortement et est donc susceptible d'induire des erreurs importantes sur la mesure de cap.

La valeur de cap recalée ainsi obtenue est stockée par lesdits moyens de calcul 21, 31, 41 et/ou utilisée par lesdits moyens pour la suite du traitement et pour les calculs d'informations de navigation magnéto-inertielles (vitesse linéaire, vitesse angulaire, position, cap, etc...).

Egalement, elle peut être transmise par les moyens de calcul à des moyens d'interface, par exemple sur le téléphone pour être affichée sur l'écran de celui-ci.

*Modèle d'évolution des perturbations liées à l'environnement*

On détaille dans ce qui suit un exemple de calcul possible du recalage dans lequel la mesure de cap magnétique $z_\psi$ est corrigée d'une estimation de la perturbation du champ magnétique liée à l'environnement.

Le cap magnétique $z_\psi$ issu de la mesure par les magnétomètres peut en effet être considéré comme se décomposant comme suit :

$$z_\psi = \psi + \psi^{(d)} + v_{z_\psi}$$

où :

- $\psi$ correspond au cap réel que l'on cherche à déterminer,
- $v_{z_\psi}$ correspond à une erreur gaussienne de mesure et
- $\psi^{(d)}$ (« d » pour « disturbance » en anglais) correspond à une perturbation de cap magnétique lié à l'environnement (typiquement, perturbations liées aux infrastructures métalliques et aux câbles électriques dans des environnements urbains ou dans des bâtiments).

La perturbation de cap magnétique liée à l'environnement est fortement corrélée spatialement. Le champ magnétique lié aux perturbations de l'environnement est en effet un champ de vecteur continu et les champs magnétiques en deux points A et B donnés sont d'autant plus proches que ces deux points A et B sont voisins dans l'espace.

La perturbation de cap $\psi^{(d)}$ liée à l'environnement est estimée par les moyens de calcul au moyen d'une formulation prenant en compte les corrélations d'évolution que l'on peut attendre pour les perturbations de champ magnétique entre deux instants d'échantillonnage successifs (corrélation temporelle, spatiale ou plus complexe).

Cette estimation est construite pour permettre un modèle markovien (qui peut être utilisé dans un filtre récursif) pour l'évolution de $\psi_d$ et

- permet de prendre en compte un modèle de l'évolution de la perturbation de cap magnétique (corrélation temporelle, spatiale ou plus complexe),
- permet de construire un modèle de filtrage pour lequel le cap est observable (sinon, on perd tout espoir de construire un estimateur de cap).

Dans l'estimation proposée, l'amplitude du recalage est estimée en fonction d'un modèle d'évolution des perturbations magnétiques entre deux instants d'échantillonnage et d'une estimation a priori de l'amplitude des perturbations.

Les inventeurs ont trouvé (et vérifié mathématiquement) que dans le cas d'une corrélation spatiale (cas de perturbations en milieu urbain ou « indoor »), une estimation adaptée de l'évolution de la perturbation $\psi^{(d)}$ entre deux instants d'échantillonnage séparés par un pas de temps est comme suit :

$$\psi^{(d)}[k+1] = \alpha[k](\psi^{(d)}[k] + \hat{u}[k]) + (1 - \alpha[k])\frac{\hat{u}[k]}{2} + v_{\psi^{(d)}}[k]$$

où

$$\alpha[k] = 1 - \frac{\sigma_u[k]^2}{2a[k]^2}$$

- $a[k]$ étant un paramètre qui représente l'amplitude a priori de la perturbation magnétique,
- $\hat{u}$ et $\sigma_u$ étant l'espérance et la variance d'une variable aléatoire qui est un modèle (sous la forme d'une variable aléatoire gaussienne) de la variation de la perturbation de cap magnétique entre 2 instants d'échantillonnage,
- $v_{\psi(d)}$ est une variable aléatoire gaussienne de variance $a[k]^2(1 - \alpha[k]^2)$.

Cette estimation est retranchée de $z_\psi$ pour le calcul d'erreur, celle-ci pouvant être directement calculée entre $\psi_{k+1}$ et ($z_\psi$ - $\psi^{(d)}[k + 1]$), ou confiée à un filtre de type Kalman qui a à la fois $\psi^{(d)}$ et $\psi$ dans son état.

*Détermination du paramètre a[k]*

Le paramètre a[k] représente l'amplitude a priori de la perturbation du cap magnétique. Il caractérise le cap et est par exemple calculé comme une fonction linéaire de la norme du gradient du champ magnétique.
Par exemple,

$$a[k] = a_0 + a_1 N[k]$$

avec

$$N[k] = \left\| \widehat{\nabla B}[k] \right\|$$

$a_0$ et $a_1$ étant deux paramètres préalablement fixés avant mise en œuvre du traitement de filtrage, $\hat{B}[k]$ tant le champ magnétique à l'instant k.
De cette façon, comme indiqué plus haut, le terme de recalage $K_k$. $Err(\psi_{k+1}, z_\psi)$ est fonction du gradient du champ magnétique mesuré par les magnétomètres 20, ce qui permet une correction efficace.
D'autres méthodes sont possibles pour déterminer le paramètre $a[k]$.
Notamment, $a[k]$ peut également être déterminé par comparaison avec un modèle du champ magnétique terrestre, par exemple en mettant en oeuvre les techniques telles que proposées dans la publication :

"Assessment of Indoor Magnetic Field Anomalies using Multiple Magnetometers Assessment of Indoor" - M.H. Afzal, V. Renaudin, G. Lachapelle - Proceedings of the 23rd International Technical Meeting of The Satellite Division of the Institute of Navigation (ION GNSS 2010) September 21 - 24, 2010.

Les solutions dans lesquelles le paramètre $a[k]$ est fonction du gradient du champ magnétique permettent toutefois de meilleures corrections, et ne nécessitent pas de modèles du champ magnétique terrestre.

*Détermination du paramètre û*

Le paramètre $\hat{u}[k]$ représente la valeur la plus probable pour l'évolution de la perturbation.
Ce paramètre est par exemple calculé en utilisant les gyromètres qu'on suppose bons à court terme. L'évolution la plus probable de la perturbation est alors donnée par la différence entre l'évolution de la mesure de cap magnétique et de l'évolution du cap gyrométrique :

$$
\begin{aligned}
\hat{u}[k] &= E\left[\psi^{(d)}[k+1] - \psi^{(d)}[k]\right] \\
&= E\left[\underbrace{\psi^{(d)}[k+1] + \psi[k+1]}_{cap\ magnétique\ mesuré\ l'instant\ k+1} - \underbrace{\left(\psi^{(d)}[k] + \psi[k]\right)}_{cap\ magnétique\ mesuré\ à\ l'instant\ k} - \underbrace{(\psi[k+1] - \psi[k])}_{évolution\ de\ cap}\right] \\
&= z_\psi[k+1] - z_\psi[k] - \omega[k]dt
\end{aligned}
$$

où : E[.] est l'espérance mathématique, $\omega[k]$ est la vitesse de rotation gyrométrique et $dt$ est le pas d'échantillonnage.

Ainsi, le paramètre *û[k]* est calculé par les moyens de calcul comme la différence entre les caps magnétiques déterminés directement à partir des sorties magnétomètres pour les instants k+1 et k, à laquelle est soustraite la rotation prédite $\omega[k]dt$.

_Détermination du paramètres $\sigma_u$_

Le paramètre $\sigma_u$ représente l'image de la corrélation entre la perturbation au pas k et celle au pas k+1.

On peut choisir avantageusement de l'indexer sur la vitesse de déplacement (ou sur le déplacement entre deux instants d'échantillonnage successifs, ce qui est similaire) de manière à rendre compte de la corrélation spatiale des perturbations magnétiques.

On pourra par exemple prendre

$$\sigma_u = c.\|v\|$$

où c est un coefficient de réglage.

**Revendications**

1. Procédé de détermination de cap par des capteurs magnétiques, dans lequel un champ magnétique est mesuré par des magnétomètres et des moyens de calcul mettent en œuvre un traitement récursif calculant pour un instant d'échantillonnage donné :

   - une estimation d'une prédiction de cap qui est fonction du cap déterminé à l'instant d'échantillonnage précédent,
   - un recalage du cap prédit ainsi estimé en fonction d'un cap magnétique déterminé à partir de mesures de magnétomètres,

   **caractérisé en ce que** lors dudit recalage, les moyens de calcul estiment l'amplitude du recalage en fonction :

   - d'un modèle d'évolution des perturbations magnétiques entre deux instants d'échantillonnage préalablement déterminé pour rendre compte d'une corrélation spatiale des évolutions de perturbations,
   et
   - d'une estimation a priori de l'amplitude des perturbations,

   et **en ce que**, pour un instant d'échantillonnage donné k +1, les moyens de calcul estiment la perturbation de cap liée à l'environnement en calculant

   $$\alpha[k](\psi^{(d)}[k] + \hat{u}[k]) + (1 - \alpha[k])\frac{\hat{u}[k]}{2} + v_{\psi^{(d)}}[k]$$

   où

   $$\alpha[k] = 1 - \frac{\sigma_u[k]^2}{2a[k]^2}$$

   et $v_{\psi^{(d)}}$ est une variable aléatoire gaussienne de variance $a[k]^2(1 - \alpha[k]^2)$,

   - k étant l'instant d'échantillonnage précédent,
   - $a[k]$ étant un paramètre qui représente l'amplitude a priori de la perturbation magnétique,
   - $\hat{u}$ et $\sigma_u$ étant deux paramètres calculés par les moyens de calculs comme une estimation de l'espérance et de la variance de l'évolution de la perturbation.

2. Procédé selon la revendication 1, dans lequel ledit recalage est fonction du gradient du champ magnétique mesuré.

3. Procédé selon la revendication 2, dans lequel les moyens de calcul estiment le paramètre $a[k]$ comme une fonction linéaire de la norme du gradient du champ magnétique.

4. Procédé selon la revendication 1, dans lequel la prédiction de cap est également fonction d'une évolution de cap prédite et le paramètre *û[k]* est calculé par les moyens de calcul comme la différence entre les caps magnétiques déterminés directement à partir des sorties magnétomètres pour les instants k+1 et k, à laquelle est soustraite l'évolution de cap prédite.

5. Procédé selon la revendication 1, dans lequel le paramètre $\sigma_u$ est estimé comme fonction de la vitesse de déplacement ou du déplacement entre deux instants d'échantillonnage successifs.

6. Procédé selon la revendication 1, dans lequel le traitement met en œuvre un filtrage Kalman dont l'état a au moins comme paramètre le cap réel et la perturbation de cap magnétique ($\psi$, $\psi^{(d)}$).

7. Procédé selon l'une des revendications précédentes, dans lequel la prédiction de cap est déterminée en fonction de mesures d'un ou plusieurs capteurs d'une centrale inertielle.

8. Procédé selon la revendication 1, dans lequel le modèle d'évolution est préalablement déterminé pour rendre compte d'une corrélation temporelle des évolutions de perturbations.

9. Procédé selon l'une des revendications précédentes, dans lequel un système de navigation magnéto-inertielles est utilisé en environnement urbain ou à l'intérieur de bâtiments, le système comportant au moins un dispositif de détermination de cap par des capteurs magnétiques, le dispositif comportant des magnétomètres et des moyens de calcul pour le calcul du cap à partir du champ magnétique mesuré par lesdits magnétomètres, les moyens de calcul mettant en œuvre, pour différents instants d'échantillonnage successifs, le traitement du procédé selon l'une des revendications précédentes.

10. Dispositif de détermination de cap par des capteurs magnétiques, comportant des magnétomètres et des moyens de calcul pour le calcul du cap à partir du champ magnétique mesuré par lesdits magnétomètres, **caractérisé en ce que** les moyens de calcul mettent en œuvre, pour différents instants d'échantillonnage successifs, le traitement du procédé selon l'une des revendications 1 à 9.

11. Système de navigation magnéto-inertielles comportant au moins un dispositif de détermination de cap selon la revendication 10.

12. Produit programme d'ordinateur comprenant des instructions de code pour l'exécution par un dispositif de détermination de cap selon la revendication 10 d'un procédé de détermination de cap selon l'une des revendications 1 à 9, lorsque ledit programme est exécuté sur un ordinateur.

13. Moyen de stockage lisible par un équipement informatique sur lequel un produit programme d'ordinateur comprend des instructions de code pour l'exécution par un dispositif de détermination de cap selon la revendication 10 d'un procédé de détermination de cap selon l'une des revendications 1 à 9.

**Patentansprüche**

1. Verfahren zur Kursbestimmung durch Magnetsensoren, wobei ein Magnetfeld durch Magnetometer gemessen wird und Rechenmittel eine rekursive Verarbeitung durchführen, die für einen gegebenen Abtastzeitpunkt berechnet:

   - eine Schätzung einer Kursvorhersage, die von dem zum vorherigen Abtastzeitpunkt bestimmten Kurs abhängt,
   - eine Neukalibrierung des so geschätzten vorhergesagten Kurses in Abhängigkeit von einem anhand von Magnetometermessungen bestimmten Magnetkurs, **dadurch gekennzeichnet, dass** die Rechenmittel bei der Neukalibrierung die Amplitude der Neukalibrierung schätzen in Abhängigkeit von:
   - einem um eine räumliche Korrelation der Störungsentwicklungen zu berücksichtigen zuvor bestimmten Entwicklungsmodell der magnetischen Störungen zwischen zwei Abtastzeitpunkten, und
   - einer A-priori-Schätzung der Amplitude der Störungen,

   und dass die Rechenmittel für einen gegebenen Abtastzeitpunkt k+1 die umgebungsbedingte Kursstörung schätzen, indem sie berechnen

$$\alpha[k]\big(\psi^{(d)}[k] + \hat{u}[k]\big) + (1 - \alpha[k])\frac{\hat{u}[k]}{2} + v_{\psi^{(d)}}[k]$$

wobei

$$\alpha[k] = 1 - \frac{\sigma_u[k]^2}{2a[k]^2}$$

und $v_{\psi^{(d)}}$ eine Gaußsche Zufallsvariable mit Varianz $a[k]^2(1-\alpha[k]^2)$ ist,

- wobei k der vorherige Abtastzeitpunkt ist,
- wobei $\alpha[k]$ ein Parameter ist, der die A-priori-Amplitude der magnetischen Störung darstellt,
- wobei $\hat{u}$ und $\sigma_u$ zwei Parameter sind, die von den Rechenmitteln als eine Schätzung der Erwartung und der Varianz der Entwicklung der Störung berechnet werden.

2. Verfahren nach Anspruch 1, wobei die Neukalibrierung vom Gradienten des gemessenen Magnetfeldes abhängt.

3. Verfahren nach Anspruch 2, wobei die Rechenmittel den Parameter $\alpha[k]$ als eine lineare Funktion der Norm des Gradienten des Magnetfeldes schätzen.

4. Verfahren nach Anspruch 1, wobei die Kursvorhersage ebenfalls von einer vorhergesagten Kursentwicklung abhängt und der Parameter $\hat{u}[k]$ von den Rechenmitteln als die Differenz zwischen den direkt aus den Magnetometerausgängen für die Zeitpunkte k+1 und k bestimmten Magnetkursen berechnet wird, von der die vorhergesagte Kursentwicklung abgezogen wird.

5. Verfahren nach Anspruch 1, wobei der Parameter $\sigma_u$ als Funktion der Bewegungsgeschwindigkeit oder der Bewegung zwischen zwei aufeinanderfolgenden Abtastzeitpunkten geschätzt wird.

6. Verfahren nach Anspruch 1, wobei die Verarbeitung eine Kalman-Filterung verwendet, deren Zustand mindestens den tatsächlichen Kurs und die magnetische Kursstörung $(\psi, \psi^{(d)})$ als Parameter hat.

7. Verfahren nach einem der vorstehenden Ansprüche, wobei die Kursvorhersage in Abhängigkeit von Messungen eines oder mehrerer Sensoren einer Trägheitszentrale bestimmt wird.

8. Verfahren nach Anspruch 1, wobei das Entwicklungsmodell zuvor bestimmt wird, um eine zeitliche Korrelation der Störungsentwicklungen zu berücksichtigen.

9. Verfahren nach einem der vorstehenden Ansprüche, wobei ein Magnet-Trägheits-Navigationssystem in einer städtischen Umgebung oder innerhalb von Gebäuden verwendet wird, wobei das System mindestens eine Vorrichtung zur Kursbestimmung durch Magnetsensoren aufweist, wobei die Vorrichtung Magnetometer und Rechenmittel zur Berechnung des Kurses aus dem von den Magnetometern gemessenen Magnetfeld aufweist, wobei die Rechenmittel für verschiedene aufeinanderfolgende Abtastzeitpunkte die Verarbeitung des Verfahrens nach einem der vorstehenden Ansprüche durchführen.

10. Vorrichtung zur Kursbestimmung durch Magnetsensoren, aufweisend Magnetometer und Rechenmittel zur Berechnung des Kurses aus dem von den Magnetometern gemessenen Magnetfeld, **dadurch gekennzeichnet, dass** die Rechenmittel für verschiedene aufeinanderfolgende Abtastzeitpunkte die Verarbeitung des Verfahrens nach einem der Ansprüche 1 bis 9 durchführen.

11. Magnet-Trägheits-Navigationssystem, das mindestens eine Vorrichtung zur Kursbestimmung nach Anspruch 10 aufweist.

12. Rechnerprogrammprodukt, das Codebefehle zur Ausführung eines Verfahrens zur Kursbestimmung nach einem der Ansprüche 1 bis 9 durch eine Vorrichtung zur Kursbestimmung nach Anspruch 10 umfasst, wenn das Programm auf einem Rechner ausgeführt wird.

13. Speichermedium, das von einer IT-Ausrüstung lesbar ist, auf dem ein Rechnerprogrammprodukt Codebefehle zur Ausführung eines Verfahrens zur Kursbestimmung nach einem der Ansprüche 1 bis 9 durch eine Vorrichtung zur Kursbestimmung nach Anspruch 10 umfasst.

**Claims**

1. A method for determining heading by magnetic sensors, in which a magnetic field is measured by magnetometers and calculation means implement a recursive processing calculating for a given sampling time:

   - an estimation of a heading prediction which is a function of the heading determined at the preceding sampling time,
   - a resetting of the thus estimated predicted heading as a function of a magnetic heading determined from magnetometer measurements,

   **characterised in that** during said resetting, the calculation means estimate the amplitude of the resetting as a function:

   - of a model of a change in magnetic disturbances between two sampling times determined beforehand to take into account a spatial correlation of the changes in disturbances,
   and
   - of an *a priori* estimation of the amplitude of the disturbances.

   and **in that**, for a given sampling time k+1, the calculation means estimate the heading disturbance linked to the environment by calculating

   $$\alpha[k](\psi^{(d)}[k] + \hat{u}[k]) + (1 - \alpha[k])\frac{\hat{u}[k]}{2} + v_{\psi^{(d)}}[k]$$

   where

   $$\alpha[k] = 1 - \frac{\sigma_u[k]^2}{2a[k]^2}$$

   and $v_{\psi^{(d)}}$ is a random Gaussian variable of variance a[k]$^2$(1 - α[k]$^2$),

   - k being the preceding sampling time,
   - *a*[*k*] being a parameter which represents the *a priori* amplitude of the magnetic disturbance,
   - *û* and $\sigma_u$ being two parameters calculated by the calculation means as an estimation of the expectation and the variance in the change in disturbance.

2. The method according to claim 1, in which said resetting is a function of the measured magnetic field gradient.

3. The method according to claim 2, in which the calculation means estimate the parameter *a*[*k*] as a linear function of the norm of the magnetic field gradient.

4. The method according to claim 1, in which the heading prediction is also a function of a predicted change in heading and the parameter *û*[*k*] is calculated by the calculation means as the difference between the magnetic headings determined directly from the magnetometer outputs for the times k+1 and k, from which is subtracted the predicted change in heading.

5. The method according to claim 1, in which the parameter $\sigma_u$ is estimated as a function of the velocity of displacement or the displacement between two successive sampling times.

6. The method according to claim 1, in which the processing implements a Kalman filtering of which the state has at least as parameter the real heading and the magnetic heading disturbance ($\psi$, $\psi^{(d)}$).

7. The method according to one of the preceding claims, in which the heading prediction is determined as a function of measurements of one or more sensors of an inertial unit.

8. The method according to claim 1, in which the change model is determined beforehand in order to take account of a temporal correlation of the changes in disturbances.

9. The method according to one of the preceding claims, in which a magneto-inertial navigation system is used in a urban environment or inside buildings, the system comprising at least one device for determining heading by means of magnetic sensors, the device comprising magnetometers and calculation means for calculating the heading from the magnetic field measured by said magnetometers, the calculation means implementing, for different successive sampling instants, the processing of the method according to one of the preceding claims.

10. A device for determining heading by magnetic sensors, comprising magnetometers and calculation means for the calculation of the heading from the magnetic field measured by said magnetometers, **characterised in that** the calculation means implement, for different successive sampling times, the processing of the method according to one of claims 1 to 9.

11. A magneto-inertial navigation system comprising at least one device for determining heading according to claim 10.

12. Computer programme product including code instructions for the execution by a device for determining heading according to claim 10 of a magnetic field measurement method according to one of claims 1 to 9, when said programme is executed on a computer.

13. Storage means readable by a computer equipment on which a computer programme product includes code instructions for the execution by a device for determining heading according to claim 10 of a magnetic field measurement method according to one of claims 1 to 9.

FIG. 1

FIG. 2

100

101 — Estimation
par modèle
de prédiction

102 — Recalage

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2264485 A
- US 2014122015 A

- FR 2999703

**Littérature non-brevet citée dans la description**

- **W. T. FAULKNER** ; **R. ALWOOD** ; **W. T. DAVID** ; **J. BOHLIN**. Gps-denied pedestrian tracking in indoor environments using an imu and magnetic compass. *Proceedings of the 2010 International Technical Meeting of The Institute of Navigation, (San Diego, CA)*, January 2010, 198-204
- **M. H. AFZAL** ; **V. RENAUDIN** ; **G. LACHAPELLE**. Magnetic field based heading estimation for pedestrian navigation environments. *011 International Conference on Indoor Positioning and Indoor Navigation, (Guimaraes, Portugal)*, September 2011

- **L. CRASSIDIS** ; **F.LANDIS MARKLEY**. *Unscented Filtering for Spacecraft Attitude Estimation*
- **M.H. AFZAL** ; **V. RENAUDIN** ; **G. LACHAPELLE**. Assessment of Indoor Magnetic Field Anomalies using Multiple Magnetometers Assessment of Indoor. *Proceedings of the 23rd International Technical Meeting of The Satellite Division of the Institute of Navigation (ION GNSS 2010) September 21 - 24, 2010.*, 21 September 2010